# EUROPEAN PATENT APPLICATION

(11) **EP 4 624 985 A1**
(43) Date of publication of application: **01.10.2025**
(21) Application number: 24166884.7
(22) Date of filing: 27.03.2024
(51) Int. Cl.: G01S 7/4865, G01S 17/10

(54) **MULTI-CHANNEL DISTANCE MEASURING MODULE FOR SCANNING AN ENVIRONMENT**

(71) Applicant: Hexagon Technology Center GmbH, 9435 Heerbrugg (CH)
(72) Inventor: WOHLGENANNT, Rainer, A-6833 Klaus (AT); BESTLER, Simon, D-88085 Langenargen (DE); MASUR, Jan-Michael, D-88131 Lindau (DE)
(74) Representative: Kaminski Harmann

(57) **Abstract**

The invention relates to a multi-channel distance measuring module (1, 1', 1", 1'", 1"") for providing scanning of an environment, e.g. for use in a laser tracker, tachymeter, scanning instrument, profiler, or surveillance instrument. By way of example, the multiple channels provide for generating a 3D image. The distance measuring module (1, 1', 1", 1 ‴, 1"") comprises an emitter (2) for emitting emission signals (3) and a sensor unit (4) embodied as integrated circuit, which comprises a multi-channel receiver (5) with a detection surface comprising multiple detection elements (26), e.g. SPAD elements, arranged as a matrix structure on a chip, and a trigger unit (6) configured to generate a sensor output trigger signal (7) that provides trigger times (10) defined by the sensor unit (4). Each of the multiple channels of the receiver (5) is provided by a macro-pixel (25) formed by a subset of the detection elements (26) associated to the detection channel. The distance measuring module (1, 1', 1", 1"', 1"") further comprises a signal shifting unit (9) external to the sensor unit (4) for altering the time positioning of actual emission instants (11) by the emitter (2) relative to a sampling clock (8) of the sensor unit (4). The emission instants (11) of the emission signals (3) are based on the sensor output trigger signal (7), wherein each of the emission instants (11) corresponds to a corresponding one of sensor-defined trigger times (10) given by the sensor output trigger signal (7) but the signal shifting unit (9) introduces an offset between a relative temporal positioning of a respective emission instant (11) to the sampling clock (8) and a relative temporal positioning of its corresponding sensor-defined trigger time (10) to the sampling clock (8).

## Description

The present invention relates to a multi-channel distance measuring module for providing scanning of an environment, e.g. for use in a laser tracker, tachymeter, scanning instrument, profiler, or surveillance instrument. By way of example, the multiple channels provide for generating a 3D image, i.e. a 2D image with depth information for each pixel of the 2D image.

3D scanning by a multi-channel distance measuring module is a very effective technology for quickly scanning an all-around view or a specific part of an environment, e.g. within minutes or seconds. The multiple channels provide, e.g. in parallel, distance measurements of different viewing directions onto the environment. For each channel, a spatial position of the acquired point of the environment can be determined from the measured distance and associated angle information. The distance is measured based on a parameter associated with the time-of-flight of a measurement signal emitted by the distance measuring module and returning from the environment.

In parallel to this geometric scanning of the environment, "conventional" two-dimensional image information (e.g. RGB image information) is often recorded, which also provides further information such as surface texture, etc.

Typical measurement tasks by a distance measuring module in the sense of the invention are, for example, the recording of objects or the surfaces thereof in the construction field, in mining, or in industrial installations, the recording of building façades or historic buildings, or the recording of accident locations and crime scenes. Further 3D measurement tasks reside, for example, in the monitoring of surroundings, for example in the context of restricted area surveillance, a warning or supervisory system for an industrial manufacturing installation, or in the context of use in driving assistance systems. Furthermore, 3D scanning is used, for example, for recognition, classification, or measurement of objects moving past the measuring apparatus, e.g. persons, vehicles, or workpieces.

Recently, so-called "imaging LiDARs" (LiDAR: light detection and ranging) are getting available as integrated circuits, which comprise a detection surface of an arrangement of so-called single photon avalanche photodiode elements (SPAD elements) and provide multiple (e.g. a 2D-Array of) detector channels. By way of example, such an imaging LiDAR is available as ASIC (application-specific integrated circuit) provided by the Sony Semiconductor Solutions Group, e.g. the IMX459 product.

Each of the SPAD elements is designed for the purpose of being able to detect an arrival time of individual photons (or individual photon packages) correctly. For example, the SPAD elements are arranged as a matrix structure on a chip, wherein the detection surface often comprises hundreds, thousands, or more than 10,000 individual SPAD elements. For example, SPAD assemblies with a photosensitivity in the visible and near infrared spectral range are available in the prior art, e.g. wherein the assemblies are based on silicon and manufactured using CMOS technology. Commercial SPAD sensors are also available at wavelengths between 800 nm and 1800 nm. These sensors primarily consist of the semiconductor material Si. In future, potentially other materials such as Ge or InGaAs will become available.

By way of example, each of the detector channels is associated with a so-called "macro-pixel", which is provided by a corresponding 2D array of SPAD elements, wherein the detector channel is configured to provide an output signal in that individual detection signals of multiple SPAD elements of the macro-pixel are read out in parallel and combined into a histogram. The histogram is then used for determining a return time of an emitted distance measurement pulse.

In high-precision distance measuring, a so-called periodic or cyclic error, which is a systematic distance error which is dependent on the sampling frequency, may become a dominant source of error for the distance measurement. The periodic or cyclic error is caused by the exact time difference between the time instance of sampling, e.g. determined by the rising edge of the sampling clock, and the exact time instance of the photons imping onto the detection area. For example, with a sampling clock of 1 GHz the time interval between two rising edges of the sampling clock amounts to 1 ns. The time interval and therefore the time difference of the exact arrival time of the photons onto the detection area within that 1 ns causes the periodic or cyclic error. As this constellation periodically repeats with the sampling clock frequency, this error repeats with a time period corresponding to the sampling frequency.

By way of example, the sampling clock generally refers to the sampling clock of a sampling system using an analog-to-digital converter (ADC), wherein the sampling clock determines the minimum resolvable time duration between two consecutive samples of the ADC. In other words, the sampling clock in this context is used as a generic term and denominates the clock frequency of the time-to-digital (TDC) converters, wherein the sampling clock determines the ("intrinsic") time resolution of the TDCs. By certain measures inside the ASIC (e.g. by using the rising and the falling edge of the sampling clock for driving the TDCs) the resolution of the TDCs may be increased, e.g. doubled by using both sampling clock edges.

With increased distance measurement accuracy requirements, use of the above-mentioned newly available imaging LiDARs embodied as integrated circuits is limited because these integrated circuits provide limited flexibility to address the periodic or cyclic error that is becoming more dominant. For example, the above mentioned sampling clock of 1 GHz cannot arbitrarily be increased as the manufacturing processes of integrated circuits limit the maximum clock frequency. In addition, higher clocks frequencies lead to increased power consumption.

It is therefore an object of the present invention to provide a multi-channel distance measuring module in the above sense, which overcomes deficiencies of the prior art.

A further object is to provide a multi-channel distance measuring module, which provides less susceptibility of distance determination to parasitic effects within the integrated circuit, e.g. parasitic effects that degrade the "cleanliness" of the sampling clock, as for example electrical crosstalk, power supply variations or temperature changes.

A further object is to provide a multi-channel distance measuring module, which increases flexibility to address periodic or cyclic errors, e.g. without substantial increase of power consumption.

These objects are achieved by the realization of at least part of the features of the independent claims. Features which further develop the invention in an alternative or advantageous manner are described in some of the other features of the independent claims and in the dependent claims.

The invention relates to a distance measuring module, e.g. for use in a laser tracker, tachymeter, scanning instrument, profiler, or surveillance instrument. The distance measuring module comprises an emitter for emitting emission signals, e.g. by pulsed measurement radiation, and a sensor unit. The sensor unit is embodied as integrated circuit, wherein the sensor unit comprises a multi-channel receiver configured to provide multiple separate detector channels for detecting the emission signals returning from an environment of the distance measuring module. The multi-channel receiver comprises a detection surface based on detection elements arranged as a matrix structure on a chip, e.g. wherein each of the detections elements is embodied as a single photon avalanche photodiode element (SPAD element). Each of the detector channels is configured to provide determination of a distance to a respective target by analyzing a temporal distribution of individual detection signals from some of the detection elements associated to the detector channel, wherein each detection signal reflects the arrival of a single photon or a defined photon package.

The sensor unit further comprises a trigger unit configured to generate a sensor output trigger signal that provides sensor-defined trigger times to be used by the distance measuring module for setting emission instants of the emission signals. The sensor output trigger signal is generated in such a way that a temporal positioning of the sensor-defined trigger times relative to a sampling clock for timing the detection signals of the detector channels is specified by the sensor unit.

The distance measuring module further comprises a signal shifting unit external to the sensor unit configured to provide the emission instants of the emission signals based on the sensor output trigger signal, wherein each of the emission instants corresponds to a corresponding one of the sensor-defined trigger times and a respective emission instant and its corresponding sensor-defined trigger time differ by an offset given by a positive non-integer multiplier times the duration of a clock cycle of the sampling clock, e.g. wherein the multiplier has a value between zero and one. In other words, a relative temporal positioning of the respective emission instant to the sampling clock differs from a relative temporal positioning of its corresponding sensor-defined trigger time to the sampling clock.

The term "sampling clock" generally relates to a unit of a sampling system provided by the multi-channel receiver, wherein sampling clock determines the time resolution of signal sampling provided by the sampling system. For example, the sampling system comprises an analog-to-digital converter (ADC), wherein the sampling clock determines the minimum resolvable time duration between two consecutive samples of the ADC. In other words, "sampling clock" is a generic term denominating the clock frequency of the time-to-digital (TDC) converters, wherein the sampling clock determines the time resolution of the TDCs.

In principle, the sensor unit itself could also be configured for being used to provide a distance measurement by driving the emitting of the emission signals by directly using the sensor-defined trigger times, i.e. without altering the sensor-defined trigger times by the signal shifting unit for triggering the actual emission instants of the emission signals. However, as described above, the maximum clock frequency is typically limited by the manufacturing process of integrated circuits and leads to increased power consumption. Additionally, achieving a "clean" and high sampling clock frequency is challenging inside an integrated circuit because parasitic effects, e.g. such as electrical crosstalk from other signals inside the integrated circuit or power supply variations inside the integrated circuit, degrade the "cleanliness" of the sampling clock. For example, this is quantified as increased phase noise, jitter and low frequency variations of the sampling clock. These deficiencies can be overcome by applying a signal shifting unit external to the sensor unit, e.g. wherein the signal shifting unit is embodied as an external synchronization circuit or even a carefully chosen, fully asynchronous laser pulser clock, and by adapting the distance processing algorithm, the periodic or cyclic error is substantially reduced. This corresponds to a so-called sub-sampling of the received emission signal, e.g. a received laser pulse, at the cost of additional measurement time (because an increased number of laser pulses is used for the distance measurement).

Accordingly, in one embodiment, the signal shifting unit is configured to provide the emission instants such that at least some of the emission instants have different offsets compared to one another between a relative temporal positioning of a respective emission instant to the sampling clock and a relative temporal positioning of its corresponding sensor-defined trigger time to the sampling clock, wherein each of the different offsets is given by a different positive non-integer multiplier times the duration of the clock cycle of the sampling clock. For example, the multiplier has a value between zero and one such that each of the different offsets is a different fraction (greater than zero and less than one) of the clock cycle of the sampling clock.

By way of example, the signal shifting unit is configured that the offsets between the temporal positionings of respective emission instants and the temporal positionings of their corresponding sensor-defined trigger times change continuously over a certain observation period/integration period/accumulation time (or over the burst of n emission signals, see below). In particular, the signal shifting unit may be configured to vary the introduced offset by a fraction of a clock cycle of the sampling clock from emission instant to the next emission instant.

In particular, the signal shifting unit is configured to provide variation of the offsets, so that within a single clock cycle or across several clock cycles, the emission instants of different pairs of corresponding emission instants and sensor-defined trigger times assume different relative clock positions relative to the sampling clock that are evenly distributed over the clock cycle length specified by the sampling clock, so that for the single clock cycle or at least virtually for the several clock cycles there is a uniform relative subsampling of the clock cycle length.

In other words, the time intervals between the sensor-defined trigger times are evenly covered ("subsampled") by the shifted emission instants.

For example, a sampling clock frequency of 1 GHz is assumed as in the example above, wherein the time interval between two rising edges of the sampling clock amounts to 1 ns. By introducing a constant and continuous shift of the emission instant by 0.1 ns and a tenfold accumulation, the time interval of 1 ns between two rising edges of the sampling clock is then evenly "subsampled" in order to get a "virtual" sampling period of 0.1 ns. The effective sampling period (assuming ten accumulations n) is then 11 ns (10·1.1 ns = 11 ns).

As another example, each of the detector channels is configured that the distance to the respective target is determined based on a burst of n emission signals, wherein the emission instants associated with the n emission signals correspond to consecutive sensor-defined trigger times provided by the sensor output trigger signal. For example, n is larger or equal to four, particularly larger or equal to ten.

In one embodiment, the consecutive sensor-defined trigger times provided by the sensor output trigger signal are progressively shifted from sensor-defined trigger time to sensor-defined trigger time relative to the time position provided by the sensor unit in steps increasing or decreasing by equal or less than 1/n of a clock cycle of the sampling clock.

In addition to using the signal shifting unit for sequentially altering a relative temporal positioning of the actual emission instants relative to the sampling clock, it is also conceivable that - although typically only in a limited fashion compared to the use of the inventive signal shifting unit - the sensor unit itself could be configured to provide some sequential variation of a temporal positioning of the sensor-defined trigger times relative to the sampling clock. For example, the sensor unit could be configured for shifting (e.g. in addition to a shifting introduced by the signal shifting unit) the sensor-defined trigger times with regard to the sampling clock by a fraction of the clock cycle of the sampling clock that is larger compared to a shift introduced by the signal shifting unit. For example, the sensor unit is configured for shifting the sensor-defined trigger times by half of the clock cycle of the sampling clock.

By way of example, the sensor unit is embodied as so-called "imaging LiDAR" and provides a 2D-Array of detector channels, wherein each detector channel is realized based on a so-called macro-pixel formed by associated detection elements (e.g. SPAD elements) of the detection surface. For example, each of the detector channels is configured to provide an output signal in that individual detection signals of multiple detection elements of the macro-pixel are read out in parallel and combined into a histogram, wherein the histogram is used for determining a return time of one of the emitted emission signals.

By way of example, timing of a return time of an emitted emission signal is based on an analysis of a histogram generated by accumulation of individual detection signals of SPAD elements. This is sometimes also referred to as time correlated photon counting or time correlated package counting. For example, each of the SPAD elements of the macro-pixel is configured to generate a current pulse when a characteristic detection packet impinges, e.g. a single photon. The time correlated photon or package counting comprises that, for each of the SPAD elements, current pulses generated by successively arriving photons or detection packets are converted into a time-resolved counting signal of the SPAD element for the successively arriving detection packets, wherein the return time of the emitted emission signal is determined by analyzing an accumulation signal generated by accumulating time-resolved counting signals from the SPAD elements of the macro-pixel.

In a further embodiment, the signal shifting unit is configured to provide a laser clock signal, wherein a frequency of the laser clock signal differs from a frequency of the sampling clock. The signal shifting unit further comprises a trigger synchronization unit configured to be being clocked by the laser clock signal and to provide for each incoming sensor-defined trigger time a synchronization unit output trigger time. The trigger synchronization unit provides a shift by a fraction of the clock cycle of the sampling clock between respective sensor-defined trigger times and their corresponding synchronization unit output trigger times, wherein the shift varies (e.g. increases or decreases) from sensor-defined trigger time to sensor-defined trigger time.

By way of example, the frequency of the sampling clock is at least 100 MHz, particularly 1 GHz, and a difference between the frequency of the laser clock signal and the frequency of the sampling clock is less than or equal to a fourth, particularly less than or equal to a tenth, of the frequency of the sampling clock.

In particular, in case the distance to the respective target is determined based on a burst of n emission signals (see above), it can be beneficial if the difference between the frequency of the laser clock signal and the frequency of the sampling clock is 1/(k·n) of the frequency of the sampling clock, where k is an integer greater than or equal to 1.

In a further embodiment, the trigger synchronization unit comprises a flip-flop circuit, e.g. a D-flip-flop circuit, configured to be driven by the sensor output trigger signal and the laser clock signal.

In a further embodiment, the distance measuring module is configured to be clocked based on a master clock and the signal shifting unit comprises a clock multiplication component, e.g. embodied as a PLL (phase-locked loop). The clock multiplication component is configured to generate the laser clock signal and/or a sensor clock signal for clocking the sensor unit from the master clock, wherein the sensor clock signal and the laser clock signal have different frequencies. In particular, the sensor clock signal is equal to the master clock, e.g. wherein the frequency of the laser clock signal is higher than a frequency of the master clock.

In a further embodiment, the distance measuring module is configured to be clocked based on a master clock and the sensor unit is clocked by a sensor clock signal derived from the master clock. For example, the sensor clock signal is equal to the master clock. The signal shifting unit comprises a clock component independent of the master clock that is configured to generate the laser clock signal with a frequency that differs from a frequency of the sensor clock signal and a frequency of the sampling clock.

In a further embodiment, the signal shifting unit comprises a trigger delay unit configured to progressively delay sensor-defined trigger times by different fractions of a clock cycle of the sampling clock. By way of example, the trigger delay unit comprises a programmable delay component, e.g. embodied as a dedicated integrated circuit capable of generating configurable delays, or an analog delay circuit.

In a further embodiment, the signal shifting unit comprises a field programmable gate array (FPGA) or a programmable logic device (PLD), configured to be clocked based on a master clock, wherein the sensor unit and the FPGA or PLD are clocked by the (e.g. same, synchronized) master clock.

In a further embodiment, the sensor unit is configured to provide the sensor-defined trigger times with adjustable frequencies, wherein a minimal time interval variation between the sensor-defined trigger times is larger than a tenth, particularly larger than a fourth, of a clock cycle of the sampling clock.

In a further embodiment, each of the detection elements is embodied as a SPAD element and each of the detector channels is associated with a subset of the SPAD elements of the detection surface, wherein each of the SPAD elements of the subset of the SPAD elements is connected to a time-to-digital converter, which is configured to provide a digital representation of current pulses as the detection signals of the SPAD element, wherein the current pulses are generated by the SPAD element upon arrival of individual photons or photon packages.

By way of example, the subset of the SPAD elements defines a so-called macro-pixel, e.g. a 3 x 3 array of SPAD elements of the detection surface. For example, each of the SPAD elements of the macro-pixel is connected to a time-to-digital converter unit over a programmable switching circuit, wherein an output signal of the macro-pixel is generated from the detection signals of the SPAD elements of the macro-pixel in the digital domain, e.g. wherein the detection signals are further (pre-)processed by additional processing logic.

In a further embodiment, the distance measuring module is configured that for each of the detector channels (e.g. associated with a macro-pixel of the detection surface) the distance to the respective target is determined by analyzing a histogram generated by the accumulation of the individual detection signals by at least one of a leading-edge discriminator, a constant fraction discriminator, a peak discriminator, a center of gravity discriminator, and an inflection discriminator.

In a further embodiment, the multi-channel receiver is configured that for each of the detector channels, different domains of the detection surface can be separately activated, such that the distance to the respective target is determined by an activated one of the different domains. Each of the domains comprises a different number of detection elements to be used to provide the determination of the distance to the respective target.

In a further embodiment, the dynamic range (which is the capability to detect low as well as high intensity signals) and applicability of the distance measuring module to different light conditions is increased by adapting the multi-channel receiver such that each of the detector channels comprises associated detection elements of the detection surface with different photosensitivity relative to each other, e.g. wherein the different photosensitivity is provided in that at least some of the detection elements are arranged behind a respective neutral density filter.

The distance measuring module according to the different aspects of the invention are described or explained in more detail below, purely by way of example, with reference to working examples shown schematically in the drawing. Identical elements are labelled with the same reference numerals in the figures. Specifically,
- Fig. 1:: a schematic depiction of an exemplary embodiment of a distance measuring module according to the invention;
- Fig. 2:: a schematic depiction of an exemplary embodiment of a distance measuring module of the prior art;
- Fig. 3:: a schematic depiction of a possible shifting scheme introduced by the signal shifting unit;
- Fig. 4:: a schematic depiction of a further exemplary embodiment of a distance measuring module according to the invention, wherein the signal shifting unit comprises a trigger synchronization unit to provide the emission instants of the emitter;
- Fig. 5:: a schematic depiction of a further exemplary embodiment of a distance measuring module according to the invention, wherein the signal shifting unit comprises a trigger synchronization unit and a clock component independent of a master clock, wherein the clock component is configured to generate a laser clock signal;
- Fig. 6:: a schematic depiction of a further exemplary embodiment of a distance measuring module according to the invention, wherein the signal shifting unit comprises a field programmable gate array to provide the emission instants of the emitter;
- Fig. 7:: a schematic depiction of a further exemplary embodiment of a distance measuring module according to the invention, wherein the signal shifting unit comprises a trigger delay unit to progressively delay sensor-defined trigger times by different fractions of a clock cycle of the sampling clock;
- Fig. 8:: a schematic depiction of some basic components of a multi-channel receiver in the sense of the invention; and
- Fig. 9:: a schematic depiction of an exemplary (on-chip) processing of a macro-pixel of a multi-channel receiver in the sense of the invention.

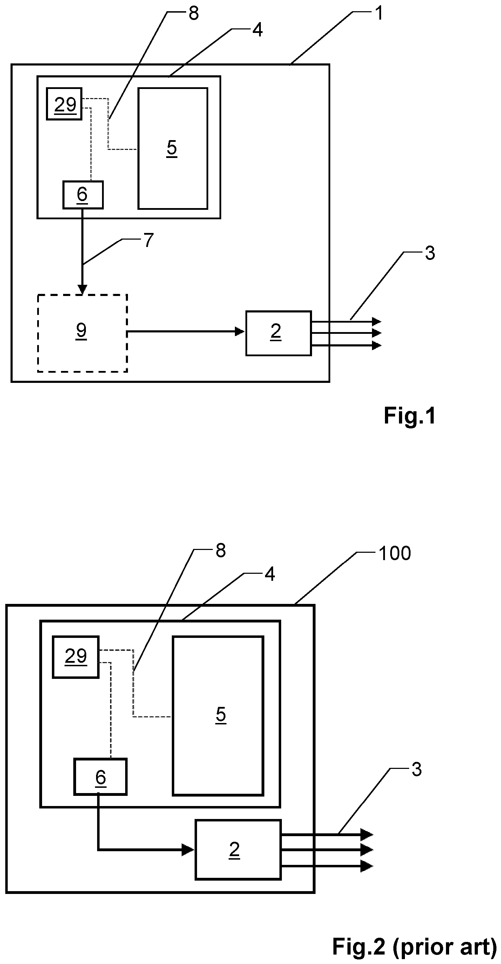

**Figure 1** schematically shows an exemplary embodiment of a distance measuring module 1 according to the invention. The distance measuring module 1 comprises an emitter 2 for emitting emission signals 3. By way of example, the emitter 2 comprises a driving circuit with a downstream lighting unit such as a light-emitting diode (LED) or a laser diode, a vertical-cavity surface-emitting laser (VCSEL), or a fiber amplified laser, configured to illuminate the scene with pulsed measurement radiation. The distance measuring module 1 further comprises a sensor unit 4 embodied as integrated circuit, which comprises a multi-channel receiver 5 with a detection surface embodied by multiple SPAD elements. The multi-channel receiver 5 is configured that several of the SPAD elements can be (e.g. adjustably) grouped to an array of SPAD elements, e.g. a so-called "macro-pixel" formed by a n × m array of SPAD elements, to form one of the multiple channels of the receiver 5. The multi-channel receiver 5 is configured to provide for measuring return times of the pulsed measurement radiation traveling from the emitter 2 to a reflecting surface of the environment and back again to the individual SPAD elements. The sensor unit 4 provides for measuring the time-of-flight and thus the distance of an object imaged on the detection surface for each group of SPAD elements/macro-pixel of the detection surface. By way of example, the multi-channel receiver 5 is configured that the combination of the (individual) SPAD elements into macro-pixels is configurable via software, e.g. wherein the software allows to set predefined array sizes such as a 3x3 or 6x6 array or wherein the software allows to freely set a n × m array size to form the macro-pixel.

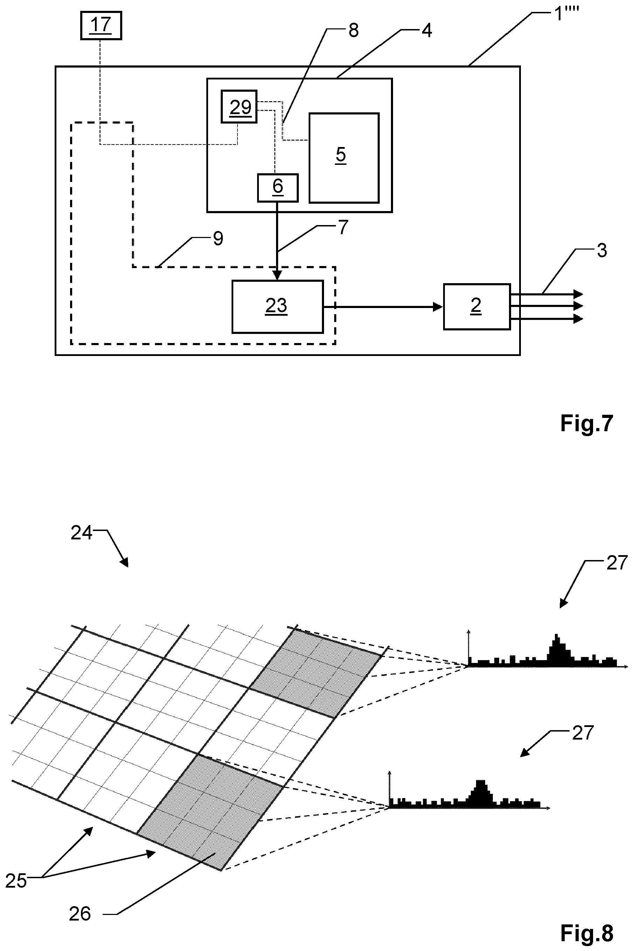

By way of example, some basic components of the multi-channel receiver are indicated in **Fig. 8****.** The figure schematically depicts part of a detection surface 24 of the multi-channel receiver mentioned above. Each of the channels is provided by a programmable combination of SPAD elements 26 into so-called macro-pixels 25. For illustration purposes, two different macro-pixels 25 are highlighted in the figure by shading. By way of example, in the figure shown a macro-pixel 25 is formed by a 3 x 3 array of associated SPAD elements 26 and each of the SPAD elements 26 of the macro-pixel 25 is connected to a time-to-digital converter unit (TDC, not shown) over a programmable switching circuit (not shown). Each of the detector channels is then provided by an associated macro-pixel 25, wherein detection signals of the SPAD elements 26 of the macro-pixel 25 are processed in the digital domain to provide an output signal 27 of the macro-pixel 25.

Each of the SPAD elements 26 is embodied based on an avalanche mechanism known from SPADs and the SPAD elements are connected individually to a corresponding time-to-digital converter (TDC) unit to provide generation of a timed output signal 27 for each macro-pixel 25, e.g. a histogram providing a time correlated photon count of photons impinging on the SPAD elements 26 of the macro-pixel 25. Often, the SPAD elements 26 are configured to provide for setting different active areas for the detection channels, wherein the active area is often referred to as the detection domain of the macro-pixel 25. For example, individual detection signals of the active SPAD elements 26 are combined on the chip into one output signal 27, e.g. a histogram, without any provision being made for the user to have access to the raw signals of the individual SPAD elements 26.

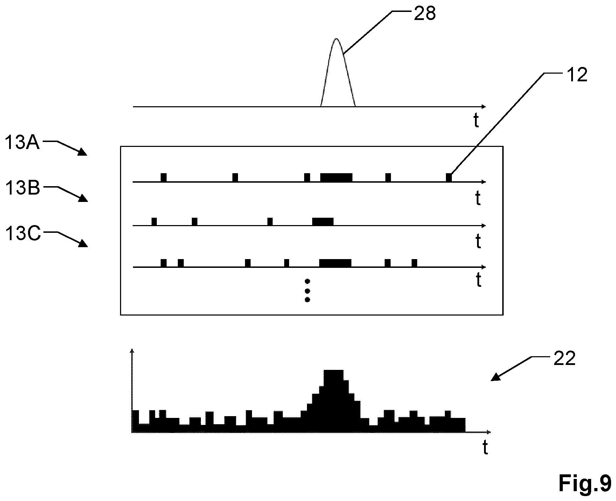

By way of example, an exemplary (on-chip) processing of a macro-pixel is schematically depicted in **Fig. 9****.** Each active SPAD element of the macro-pixel is triggered and breaks through when a photon (or a defined photon package) arrives, upon which a current pulse is generated, wherein each triggered SPAD element delivers the same current pulse. This pulse provides a detection signal 12 of the SPAD element, which is timed using a time-to-digital converter (TDC). By accumulating several time signals 13A, 13B, 13C (time histories of detection signals 12 of each SPAD element) of several active SPAD elements (histogram formation), a combined time signal for the macro-pixel in the form of a histogram 22 is created in which the returning emission signal 28 is reflected and can be evaluated. In other words, each SPAD element delivers a quasi-digital time signal 13A, 13B, 13C and the accumulation provides the waveform of the returning emission signal 28 based on these digitized signals 13A, 13B, 13C.

Referring again to **Fig. 1****,** the distance measuring module 1 further comprises a trigger unit 6 configured to generate a sensor output trigger signal 7. In the prior art, e.g. as schematically depicted by **Fig. 2****,** the sensor output trigger signal 7 is directly fed to the emitter 2, e.g. wherein the emitter comprises a driving circuit (laser driver) with a downstream lighting unit as described above. In such a standalone use of the sensor unit 4 as known in the prior art, wherein the sensor unit 4 is (directly) connected to an emitter in a conventional fashion, the sensor output trigger signal 7 would directly set trigger times for emitting emission signals by the emitter in a way to provide distance determination by the sensor unit detecting returning emission signals reflected by surfaces of the environment.

According to the invention, referring again to **Fig. 1****,** the distance measuring module 1 further comprises a signal shifting unit 9 external to the sensor unit 4, e.g. wherein the signal shifting unit 9 is embodied as an external synchronization circuit. The signal shifting unit 9 provides for altering the time positioning of the actual emission instants by the emitter 2 relative to a sampling clock 8 of the sensor unit 4 used for detecting/sampling returning emission signals. For example, the sampling clock 8 is derived or generated via a PLL 29. The emission instants of the emission signals 3 are thus based on the sensor output trigger signal 7, wherein each of the emission instants corresponds to a corresponding one of sensor-defined trigger times given by the sensor output trigger signal 7 but the signal shifting unit 9 introduces an offset by a fraction of a clock cycle of the sampling clock 8 between a relative temporal positioning of a respective emission instant to the sampling clock 8 and a relative temporal positioning of its corresponding sensor-defined trigger time to the sampling clock 8.

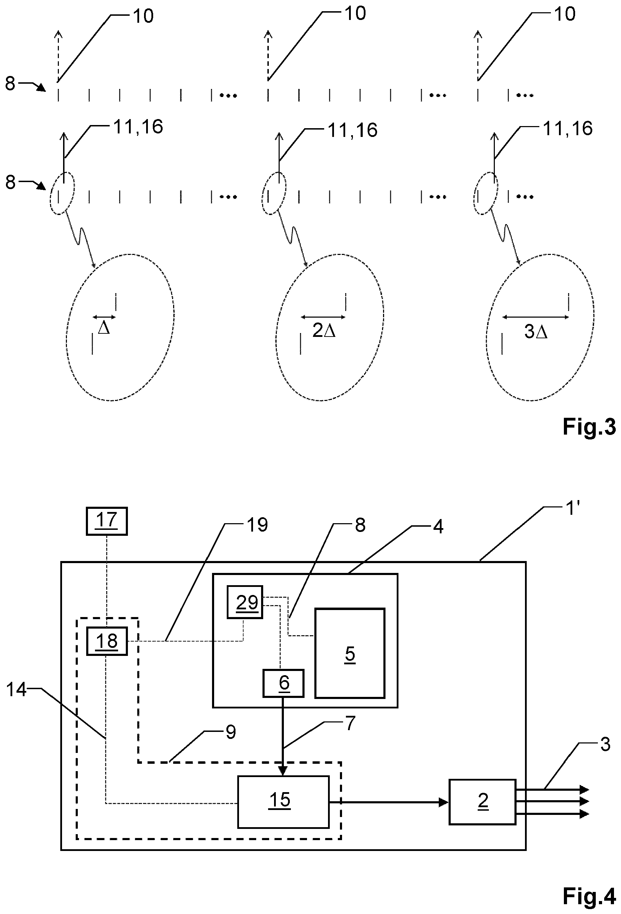

**Figure 3** schematically depicts a possible shifting scheme introduced by the signal shifting unit 9 (see Fig. 1). On top, the figure depicts part of a series of sensor-defined trigger times 10 provided by the sensor output trigger signal 7 (see Fig. 1) and the relative position of the sensor-defined trigger times 10 to the sampling clock 8. For comparison, the (actual) emission instants 11 as provided by the signal shifting unit based on the sensor output trigger signal are shown below their corresponding sensor-defined trigger times 10. Again, the sampling clock 8 is indicated below the emission instants 11 to better visualize offsets introduced by the signal shifting unit. In the embodiment shown, as highlighted by the zoomed-in sections showing the emission instants 11 relative to the sampling clock 8, the signal shifting unit introduces a continuously increasing offset by a fraction Δ of the clock cycle of the sampling clock 8 from emission instant 11 to the next emission instant 11.

As an alternative to the depicted sequential increasing of the offset Δ, the signal shifting unit may also be configured to introduce any order of different amounts of the offset Δ, e.g. an order like 1·Δ, 6·Δ, 2·Δ, 7·Δ, 3·Δ, 8·Δ, 4·Δ, 9·Δ, 5·Δ, 0·Δ in case of using ten samples per clock cycle of the sampling clock 8. This would still provide a beneficial uniform subsampling of the clock cycle length.

The offset Δ could also be larger than the clock cycle length T_{sampling clock}, e.g. wherein the signal shifting unit is configured to introduce offsets Δ = (1 + 1/n) · T_{sampling clock}, with n being the number of desired samples per clock cycle length T_{sampling clock}. Across several clock cycles, this results in a relative subsampling of the clock cycle length T_{sampling clock}, i.e. wherein at least relative to the clock cycle length T_{sampling clock} there are sampling points (although distributed across several clock cycles) for each (1 · 1/n), (2 · 1/n), ... (n · 1/n) fractions of the clock cycle length T_{sampling clock}. For example, in case of subsampling with ten subsamples there is a "virtual" (relative) subsampling at positions 0.1·T_{sampling clock}, 0.2·T_{sampling clock}, ... 1·T_{sampling clock}, wherein the fact these relative positions are distributed across several different clock cycles in absolute terms can be taken into account by adapting the processing algorithm for distance determination.

More generally speaking, the shifting unit could be configured to introduce offsets Δ = (k + 1/n) · T_{sampling clock}, with n being the number of desired samples per clock cycle length T_{sampling clock} and k being a constant integer number. For example, for practical reasons k is a comparatively small number, preferably 0 or a number between 1 to 10 or a number between 1 to 100.

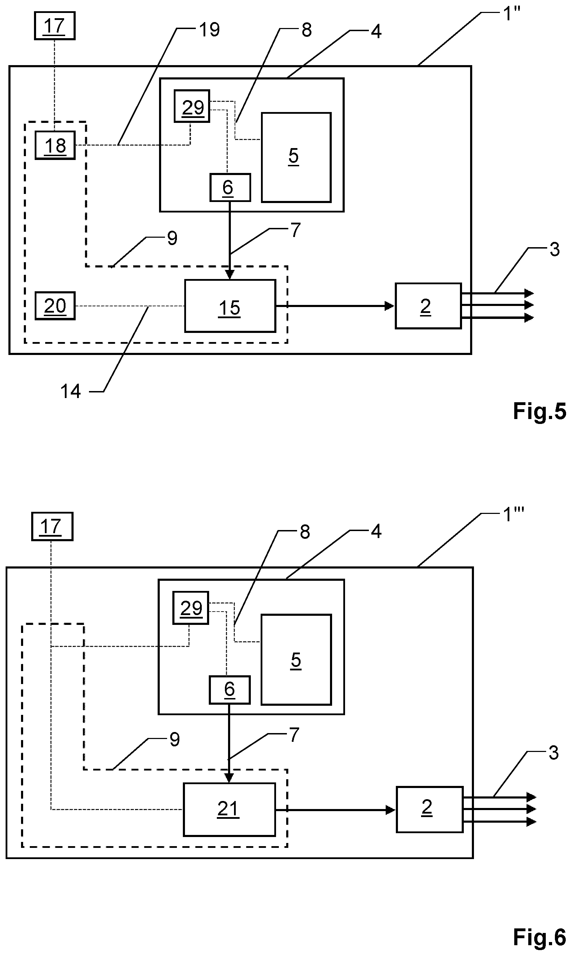

By way of example (see also embodiments depicted by Figs. 4 or 5), the signal shifting unit comprises a trigger synchronization unit configured to be clocked by a laser clock signal and to provide a synchronization unit output trigger time 16 for each incoming sensor-defined trigger time 10. The trigger synchronization unit provides a shift between respective sensor-defined trigger times 10 and their corresponding synchronization unit output trigger times 16, e.g. wherein the shift continuously increases by the fraction Δ of the clock cycle of the sampling clock 8 as described above.

**Figure 4** schematically shows a further exemplary embodiment of a distance measuring module 1 according to the invention. Here, the distance measuring module 1 is clocked based on a master clock 17 and the signal shifting unit 9 comprises a PLL as clock multiplication component 18. The clock multiplication component 18 is configured to generate a laser clock signal 14 and a sensor clock signal 19 for clocking the sensor unit 4 from the master clock 17. The sampling clock 8 is derived or generated from the sensor clock signal 19, e.g. via a PLL (29) of the sensor unit 4. The frequency of the laser clock signal 14 differs from the frequency of the sensor clock signal 19 (and thus the frequency of the sampling clock). The signal shifting unit 9 further comprises a trigger synchronization unit 15 as described above. For example, the trigger synchronization unit 15 comprises a D-flip-flop circuit configured to be driven by the sensor output trigger signal 7 and the laser clock signal 14 and to provide a synchronization unit output trigger time for each incoming sensor-defined trigger time provided by the sensor output trigger signal 7.

By way of example, the sensor unit 4 and the sensor clock signal 19 are provided such that the frequency of the sampling clock 8 is at least 100 MHz and a difference between the frequency of the laser clock signal 14 and the frequency of the sampling clock 8 is less than a fourth of the frequency of the sampling clock 8.

**Figure 5** schematically shows a further exemplary embodiment of a distance measuring module 1 according to the invention. Similar to the embodiment depicted above with reference to Fig. 4, the distance measuring module 1 is clocked based on a master clock 17 and comprises a clock multiplication component 18. Again, the sensor unit 4 is clocked by a sensor clock signal 19 derived by the clock multiplication component 18 from the master clock 17. For example, the sensor clock signal 19 is equal to the master clock 17. However, here the signal shifting unit 9 further comprises a clock component 20 independent of the master clock 17 that is configured to generate the laser clock signal 14 with a frequency that differs from a frequency of the sensor clock signal 19 and a frequency of the sampling clock 8. The trigger synchronization unit 15 is configured as described for one of the embodiments above.

**Figure 6** schematically shows a further exemplary embodiment of a distance measuring module 1 according to the invention. The distance measuring module 1 is configured to be clocked based on a master clock 17 and the signal shifting unit 9 comprises a field programmable gate array (FPGA) 21. Both the sensor unit 4 and the FPGA 21 are (directly) clocked by the master clock 17.

**Figure 7** schematically shows a further exemplary embodiment of a distance measuring module 1 according to the invention. The distance measuring module 1 is configured to be clocked based on a master clock 17 and the signal shifting unit 9 comprises a trigger delay unit 23. By way of example, the trigger delay unit 23 comprises a programmable delay component embodied as a dedicated integrated circuit capable of generating configurable delays. The trigger delay unit 23 is thus configured to progressively delay sensor-defined trigger times provided by the sensor output trigger signal 7 by different fractions of a clock cycle of the sampling clock.

Although the invention is illustrated above, partly with reference to some preferred embodiments, it must be understood that numerous modifications and combinations of different features of the embodiments can be made. All of these modifications lie within the scope of the appended claims.

## Claims

1. Distance measuring module (1, 1', 1", 1‴, 1ʺʺ), in particular for use in a laser tracker, tachymeter, scanning instrument, profiler, or surveillance instrument, wherein the distance measuring module (1, 1', 1", 1‴, 1ʺʺ) comprises an emitter (2) for emitting emission signals (3) and a sensor unit (4) embodied as integrated circuit, wherein the sensor unit (4) comprises
• a multi-channel receiver (5) configured to provide multiple separate detector channels for detecting the emission signals returning from an environment of the distance measuring module (1, 1', 1", 1 "', 1""), wherein the multi-channel receiver (5) comprises a detection surface based on detection elements (26) arranged as a matrix structure on a chip, particularly each of the detection elements being embodied as a single photon avalanche photodiode element, and wherein each of the detector channels is configured to provide determination of a distance to a respective target by analyzing a temporal distribution of individual detection signals (12) from some of the detection elements (26) associated to the detector channel, wherein each detection signal (12) reflects the arrival of a single photon or a defined photon package, and
• a trigger unit (6) configured to generate a sensor output trigger signal (7) that provides sensor-defined trigger times (10) to be used by the distance measuring module (1, 1', 1", 1‴, 1ʺʺ) for setting emission instants (11) of the emission signals (3), wherein a temporal positioning of the sensor-defined trigger times (10) relative to a sampling clock (8) for timing the detection signals of the detector channels is specified by the sensor unit (4),
**characterized in that**
the distance measuring module (1, 1', 1", 1 "', 1"") comprises a signal shifting unit (9) external to the sensor unit (4) configured to provide the emission instants (11) of the emission signals (3) based on the sensor output trigger signal (7), wherein each of the emission instants (11) corresponds to a corresponding one of the sensor-defined trigger times (10) and a respective emission instant (11) and its corresponding sensor-defined trigger time (10) differ by an offset given by a positive non-integer multiplier times the duration of a clock cycle of the sampling clock (8).

2. Distance measuring module (1, 1', 1", 1‴, 1"") according to claim 1, wherein the signal shifting unit (9) is configured to provide the emission instants (11) such that at least some of the emission instants (11) have different offsets compared to one another between a relative temporal positioning of a respective emission instant (11) to the sampling clock (8) and a relative temporal positioning of its corresponding sensor-defined trigger time (10) to the sampling clock (8), wherein each of the different offsets is given by a different positive non-integer multiplier times the duration of the clock cycle of the sampling clock (8), particularly wherein the multiplier has a value between zero and one.

3. Distance measuring module (1, 1', 1", 1‴, 1"") according to claim 2, wherein the signal shifting unit is configured to provide variation of the offsets, so that within a single clock cycle or across several clock cycles of the sampling clock, the emission instants of different pairs of corresponding emission instants and sensor-defined trigger times assume different relative clock positions relative to the sampling clock that are evenly distributed over to the clock cycle length specified by the sampling clock, so that for the single clock cycle or at least virtually for the several clock cycles there is a uniform relative subsampling of the clock cycle length.

4. Distance measuring module (1, 1', 1", 1‴, 1"") according to any one of the preceding claims, wherein each of the detector channels is configured that the distance to the respective target is determined based on a burst of n emission signals (3), particularly with n being larger or equal to four, and the emission instants (11) associated with the n emission signals (3) correspond to consecutive sensor-defined trigger times (10) provided by the sensor output trigger signal (7), which are progressively shifted from sensor-defined trigger time (10) to sensor-defined trigger time (10) relative to the time position provided by the sensor unit (4) in steps increasing or decreasing by equal or less than 1/n of a clock cycle of the sampling clock (8).

5. Distance measuring module (1, 1', 1") according to any one of the preceding claims, wherein the signal shifting unit (9) is configured to provide a laser clock signal (14), wherein a frequency of the laser clock signal (14) differs from a frequency of the sampling clock (8), and comprises a trigger synchronization unit (15) configured to be clocked by the laser clock signal (14) and to provide for each incoming sensor-defined trigger time (10) a synchronization unit output trigger time (16), wherein the trigger synchronization unit (15) provides a shift by a fraction of the clock cycle of the sampling clock (8) between respective sensor-defined trigger times (10) and their corresponding synchronization unit output trigger times (16), wherein the shift varies from sensor-defined trigger time (10) to sensor-defined trigger time (10),
particularly wherein the frequency of the sampling clock (8) is at least 100 MHz, more particularly 1 GHz, and a difference between the frequency of the laser clock signal (14) and the frequency of the sampling clock (8) is less than or equal to a fourth, more particularly less than or equal to a tenth, of the frequency of the sampling clock (8).

6. Distance measuring module (1, 1', 1") according to claim 5, wherein the trigger synchronization unit (15) comprises a flip-flop circuit, particularly a D-flip-flop circuit, configured to be driven by the sensor output trigger signal (7) and the laser clock signal (14).

7. Distance measuring module (1, 1', 1") according to any one of claims 5 to 6, wherein the distance measuring module (1, 1', 1") is configured to be clocked based on a master clock (17) and the signal shifting unit (9) comprises a clock multiplication component (18), particularly embodied as a PLL, configured to generate the laser clock signal (14) and/or a sensor clock signal (19) for clocking the sensor unit (4) from the master clock (17), wherein the sensor clock signal (19) and the laser clock signal (14) have different frequencies.

8. Distance measuring module (1, 1', 1") according to claim 7, wherein the sensor clock signal (19) is equal to the master clock (17), particularly wherein the frequency of the laser clock signal (14) is lower than a frequency of the master clock (17).

9. Distance measuring module (1, 1") according to any one of claims 5 to 6, wherein the distance measuring module (1, 1") is configured to be clocked based on a master clock (17) and the sensor unit (4) is clocked by a sensor clock signal (19) derived from the master clock (17), particularly wherein the sensor clock signal (19) is equal to the master clock (17), and the signal shifting unit (9) comprises a clock component (20) independent of the master clock (17) that is configured to generate the laser clock signal (14) with a frequency that differs from a frequency of the sensor clock signal (19) and a frequency of the sampling clock (8).

10. Distance measuring module (1, 1"") according to any one of claims 1 to 4, wherein the signal shifting unit (9) comprises a trigger delay unit (23) configured to progressively delay sensor-defined trigger times (10) by different fractions of a clock cycle of the sampling clock (8),
particularly wherein the trigger delay unit (23) comprises
• a programmable delay component, particularly embodied as a dedicated integrated circuit capable of generating configurable delays, or
• an analog delay circuit.

11. Distance measuring module (1, 1‴) according to any one of claims 1 to 4, wherein the signal shifting unit (9) comprises a field programmable gate array (21), FPGA, or a programmable logic device, PLD, configured to be clocked based on a master clock (17), wherein the sensor unit (4) and the FPGA (21) or PLD are clocked by the master clock (17).

12. Distance measuring module (1, 1', 1", 1‴, 1"") according to any one of the preceding claims, wherein the sensor unit (4) is configured to provide the sensor-defined trigger times (10) with adjustable frequencies, wherein a minimal time interval variation between the sensor-defined trigger times (10) is larger than a tenth, particularly larger than a fourth, of a clock cycle of the sampling clock (8).

13. Distance measuring module (1, 1', 1", 1‴, 1"") according to any one of the preceding claims, wherein each of the detection elements (26) is embodied as a single photon avalanche photodiode element, SPAD element, and each of the detector channels is associated with a subset of the SPAD elements (26) of the detection surface, wherein each of the SPAD elements (26) of the subset of the SPAD elements is connected to a time-to-digital converter, which is configured to provide a digital representation of current pulses as the detection signals (12) of the SPAD element, wherein the current pulses are generated by the SPAD element (26) upon arrival of individual photons or photon packages.

14. Distance measuring module (1, 1', 1", 1‴, 1"") according to any one of the preceding claims, wherein the distance measuring module (1, 1', 1", 1‴, 1"") is configured that for each of the detector channels the distance to the respective target is determined by analyzing a histogram (22) generated by the accumulation of the individual detection signals (12) by at least one of a leading-edge discriminator, a constant fraction discriminator, a peak discriminator, a center of gravity discriminator, and an inflection discriminator.

15. Distance measuring module (1, 1', 1", 1‴, 1"") according to any one of the preceding claims, wherein the multi-channel receiver (5) is configured that for each of the detector channels, different domains of the detection surface can be separately activated, such that the distance to the respective target is determined by an activated one of the different domains, wherein each of the domains comprises a different number of detection elements (26) to be used to provide the determination of the distance to the respective target.
